# EUROPEAN PATENT APPLICATION

(11) **EP 1 942 164 A1**
(43) Date of publication of application: **09.07.2008**
(21) Application number: 06811305.9
(22) Date of filing: 05.10.2006
(51) Int. Cl.: C09D 201/02, B05D 7/14, B05D 7/24, B32B 27/00, C09D 105/16

(54) **MATERIAL FOR CURABLE AQUEOUS OVERCOATING MATERIAL AND COATING MATERIAL USING SAME**

(30) Priority: 06.10.2005 JP 2005293535; 06.10.2005 JP 2005293536
(71) Applicant: Nissan Motor Co., Ltd., Kanagawa 221-0023 (JP); The University of Tokyo, Bunkyo-Ku, Tokyo 113-8654 (JP)
(72) Inventor: ITO, Kohzo, Tokyo 116-0002 (JP); ARAKI, Jun, Tokyo 104-0052 (JP); SUZUKI, Tatsuya, Kanagawa 243-0123 (JP); YAMANAKA, Masahiko, Kanagawa 243-0123 (JP); WATANABE, Kentarou, Kanagawa 243-0123 (JP)
(74) Representative: Hager, Thomas Johannes
(86) International application number: PCT/JP2006/319967
(87) International publication number: WO 2007/043434

(57) **Abstract**

There is provided a curable aqueous overcoating composition containing 1 to 90 mass% of hydrophilic polyrotaxane with respect to the coating film forming component, where the hydrophilic polyrotaxane has a cyclic molecule, a linear molecule included in the cyclic molecule in a skewered manner and blocking groups arranged on opposite ends of the linear molecule to prevent elimination of the cyclic molecule from the linear molecule and at least one of the linear molecule and the cyclic molecule has a hydrophilic modifying group.

## Description

### TECHNICAL FIELD

The present invention relates to an overcoating composition suitable for automotive bodies, automotive parts such as aluminum wheel and door mirror treated with plating, deposition, sputtering etc., interior or exterior resin molded parts, wooden products such as staircase, floor and furniture and the like and, more particularly, to a hydrophilic polyrotaxane used as a highly abrasion-resistant curable aqueous overcoating material.

### BACKGROUND ART

Molded parts of polycarbonate resins, acrylic resins and the like can be surface treated with curable coatings such as room-temperature drying coatings and two-liquid urethane coatings for property improvements when the resin molded parts do not satisfy a required level of properties including hardness, weather resistance, stain resistance, solvent resistance and corrosion resistance. Further, various parts may be treated with metal mirror finishings such as plating, deposition and sputtering for product design improvements. These metal mirror finishings are likely to be damaged remarkably and thus generally surface treated with curable coatings such as room-temperature drying coatings and two-liquid urethane coatings.

On the other hand, there has recently been an increasing tendency to provide automotive topcoatings with improved durability so as to maintain new-car coating appearances over an extended time period. It is thus desired that the coatings show sufficient abrasion resistance to be protected from damages by car wash, dust, stone and the like. As such abrasive-resistant coatings, there are conventionally known ultraviolet (UV) curable coatings, electron-beam (EB) curable coatings, silica hard coatings, two-liquid acrylic urethane soft coatings. (Refer to Patent Publication 1.)

Patent Document 1: Japanese Patent Publication No. H6-43572

However, the surface treatment films of the room-temperature drying coatings and two-liquid urethane coatings are likely to be damaged remarkably. The UV curable coatings, EB curable coatings and silica hard coatings are likely to cause decreases in adhesion to substrates and susceptible to cracking due to the use of hard monomers for high hardness and the increase of coating film distortions during curing shrinkage for high crosslinking density. The two-liquid acrylic urethane soft coatings are free from chipping and cracking problems, but are likely to leave tacky feelings and low in weather and stain resistance.

There has been also a recent demand to develop aqueous water-soluble coating materials that do not require the use of organic solvents.

### SUMMARY OF THE INVENTION

The present invention has been made to solve the above conventional coating problems. It is an object of the present invention to provide a curable aqueous overcoating composition having excellent abrasion resitance, chipping resistance, cracking resistance and any other required coating properties e.g. weather resistance, stain resistance, adhesion etc. and a suitable material for such a curable aqueous overcoating composition.

As a result of extensive researches, the present inventors have focused attention to a polyrotaxane having elasticity, viscoelasticity and mechanical strength under its pulley effect and found that the above object can be achieved by modifying the polyrotaxane to the water-soluble curable type e.g. with hydrophilic modification of all or part of hydroxyl groups of cyclic molecule(s) of the polyrotaxane and using such a hydrophilic polyrotaxane as a coating material. The present invention is based on these findings.

According to the present invention, there is provided a curable aqueous overcoating material formed of a hydrophilic polyrotaxane alone or in combination with another resin or resins, the hydrophilic polyrotaxane having a cyclic molecule, a linear molecule included in the cyclic molecule in a skewered manner and blocking groups arranged on opposite ends of the linear molecule to prevent elimination of the cyclic molecule from the linear molecule, at least one of the linear molecule and the cyclic molecule having a hydrophilic modifying group.

There is also provided a curable aqueous overcoating composition containing 1 to 90% of the hydrophilic polyrotaxane with respect to the coating film forming component and a coating film formed by curing the curable aqueous overcoating composition.

In the present invention, the polyrotaxane is modified with the hydrophilic modifying group so as to show water solubility. By the use of such a water-soluble modified polyrotaxane as the material of the curable aqueous overcoating composition, the coating film of the curable aqueous overcoating composition is able to attain improved abrasion and chipping resistance because of the elasticity, viscoelasticity and mechanical strength of the polyrotaxane on the basis of the polyrotaxane pulley effect.

### BRIEF DESCRIPTION OF THE DRAWINGS

FIG. 1 is a schematic view showing an example of basic structure of a hydrophilic polyrotaxane according to the present invention.
FIG. 2A is a schematic view showing a structure example of a crosslinked polyrotaxane according to the present invention.
FIG. 2B is a schematic view showing a structure example of the crosslinked polyrotaxane under stress.
FIG. 3 is a schematic section view showing a structure of a laminated coating film according to one embodiment of the present invention.
FIG. 4 is a schematic section view showing a structure of a laminated coating film according to another embodiment of the present invention.
FIG. 5 is a schematic section view showing a structure of a laminated coating film according to still another embodiment of the present invention.

### DETAILED DESCRIPTION

Hereinafter, the present invention will be described below in detail with reference to the drawings. In the following description, all percentages (%) are by mass unless otherwise specified.

A curable aqueous overcoating material of the present invention is formed of a hydrophilic polyrotaxane 1 alone or in combination with an additional resin. Specific examples of the additional resin include, but not limited to, acrylic resins, epoxy resins and polyester resins. A curable aqueous coating composition of the present invention is prepared by blending and mixing the curable aqueous coating material with at least one selected from the group consisting of a resin, a curing agent, an addition agent, a pigment, a brightening agent and a solvent according to a common procedure. A coating film of the present invention is formed by curing the curable aqueous coating composition.

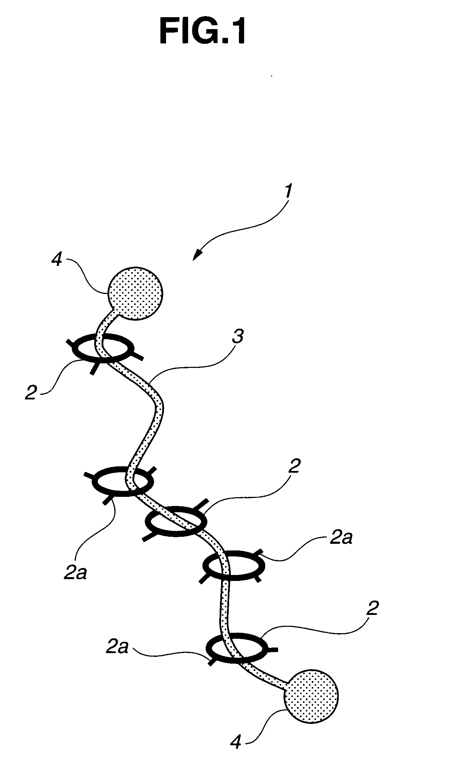

FIG. 1 is a schematic view showing an example of basic structure of the hydrophilic polyrotaxane 1. The hydrophilic polyrotaxane 1 has a cyclic molecule or molecules 2, a linear molecule 3 passing through an opening(s) of the cyclic molecule(s) 2 in a skewered manner and blocking groups 4 bonded to opposite ends of the linear molecule 3 so as to prevent elimination of the cyclic molecule(s) 2 from the linear molecule 3. Under external stress, the polyrotaxane 1 has the property (called the pulley effect) of allowing the cyclic molecule 2 to move freely along the linear molecule 3 for excellent elasticity and viscoelasticity.

In the present invention, either or both of the cyclic molecule 2 and the linear molecule 3, for example, the cyclic molecule 2 has a hydrophilic modifying group(s) 2a as shown in FIG. 1 so that the polyrotaxane 1 is modified to the water-soluble or aqueous solvent-soluble, curable type and is thus mixable as an aqueous coating material. By the impartment of such water or aqueous solvent solubility, it is possible to apply water or aqueous solvent as a reaction field (notably, crosslinking field) of the polyrotaxane although the polyrotaxane is originally hardly soluble or insoluble in water or aqueous solvent. Namely, the reactivity of the polyrotaxane 1 is so increased that the polyrotaxane 1 can be easily crosslinked with the other polymer and be modified with the modifying group in the presence of water or aqueous solvent.

The modifying group 2a include hydrophilic group, or hydrophilic and hydrophobic groups, so as to show hydrophilicity in the entirety. Specific examples of the hydrophilic group are carboxyl groups, sulfonic acid groups, sulfuric ester groups, phosphoric ester groups, primary to tertiary amino groups, quaternary ammonium salt groups and hydroxyalkyl groups. Specific examples of the hydrophobic group are alkyl groups, benzyl (benzene ring) and benzene derivative containing groups, acyl groups, silyl groups, trityl groups, nitric ester groups and tosyl groups.

There is no particular restriction on the cyclic molecule 2 as long as the pulley effect can be produced by inclusion of the linear molecule 3 in the cyclic molecule 2 as mentioned above. Various cyclic molecules are usable. The cyclic molecules are often provided with hydroxyl groups. The cyclic molecule 2 does not necessarily have a completely closed cyclic structure and may have a substantially cyclic structure such as C-shaped structure.

Preferably, the cyclic molecule 2 has a reactive group for ease of bonding with the hydrophilic modifying group 2a. Specific examples of the reactive group include, but not limited to, a hydroxyl group, carboxyl groups, amino groups, epoxy groups, isocyanate groups, thiol groups and aldehyde groups. Preferred as the reactive group are those that do not react with the blocking groups 4 during the formation of the blocking groups 4 (blocking reaction).

The degree of modification of the cyclic molecule 2 with the hydrophilic modifying group 2a is preferably 0.1 or greater, more preferably 0.3 or greater, still more preferably 0.5 or greater, with the proviso that the maximum possible degree of modification of the hydroxyl groups of the cyclic molecule 2 is 1. If the degree of modification of the cyclic molecule 2 with the hydrophilic modifying group 2a is less than 0.1, the polyrotaxane does not show sufficient solvability in water or aqueous solvent so that there may arise an insoluble spot (such as a protrusion due to the adhesion of a foreign substance). Herein, the maximum possible degree of modification of the hydroxyl groups of the cyclic molecule 2 refers to the total number of the hydroxyl groups of the cyclic molecule 2 before modified. The modification degree of the cyclic molecule 2 with the hydrophilic modifying group 2a is thus defined as the ratio of the number of the hydroxyl group or groups modified with the hydrophilic modifying group 2a to the total hydroxyl group number.

When the polyrotaxane 1 has a plurality of cyclic molecules 2, all or part of the hydroxyl groups of each cyclic molecule 2 are not necessarily modified with the hydrophilic group 2a. As long as the polyrotaxane 1 shows hydrophilicity in its entirety, a part of the cyclic molecules 2 may have no hydroxyl groups modified with the hydrophilic group 2a. The polyrotaxane 1 has at least one hydrophilic group 2a, preferably one hydrophilic group 2a on each cyclic molecule 2 e.g. on each cyclodextrin ring. More specifically, it is preferable that the polyrotaxane 1 has a solubility parameter of 8.5 to 23.4 and is capable of being dissolved or dispersed uniformly in water or aqueous solvent. When the hydrophilic group 2a has functionality, the polyrotaxane can attain improved reactivity against the other polymer.

In the case of using cyclodextrin as the cyclic molecule 2 of the polyrotaxane 1, the hydrophilic modifying group 2a can be introduced into the cyclic molecule 2 by hydroxy-propylation of the cyclodextrin with propylene oxide. In this case, the hydroxyalkyl modification degree of the cyclodextrin can be controlled by adjusting the addition amount of the propylene oxide.

The number of the cyclic molecule or molecules 2 for inclusion of the linear molecule 3 (referred to as the inclusion amount of the cyclic molecule 2) is preferably 0.06 to 0.61, more preferably 0.11 to 0.48, still more preferably 0.24 to 0.41, with the proviso that the maximum possible inclusion amount of the cyclic molecule 2 to include therein the linear molecule 3 is 1. If the inclusion amount of the cyclic molecule 2 is less than 0.06, the coating film may decrease in elongation due to insufficient pulley effect of the cyclic molecule 2. If the inclusion amount of the cyclic molecule 2 exceeds 0.61, the cyclic molecule 2 are low in mobility due to their too close configuration so that the coating film may decrease in elongation to cause chipping and abrasion resistance deterioration.

For example, in the case of producing the polyrotaxane 1 by preparing a solution in which BOP (benzotriazole-1-yl-oxy-tris(dimethylamino) phosphonium hexafluorophosphate) reagent, HOBt (1-hydroxybenzotriazole), adamantine amine and diisopropylethyl amine have been dissolved in DMF (dimethylformamide) in this order, preparing a dispersion liquid in which an inclusion complex of the cyclic molecule 2 and the linear molecule 3 has been dispersed in a mixed solvent of dimethylformamide and dimethyl sulfoxide (DMSO) and adding the dispersion liquid to the solution, the inclusion amount of the cyclic molecule 2 can be controlled by adjusting the mixture ratio of the mixed solution. In this case, the inclusion amount of the cyclic molecule 2 increases with the proportion of DMF to DMF/DMSO.

Specific examples of the cyclic molecule 2 include various cyclodextrins such as α-cyclodextrin (glucose number: 6), β-cyclodextrin (glucose number: 7), γ-cyclodextrin (glucose number: 8), dimethylcyclodextrin and glucosylcyclodextrin and derivatives or modified variants thereof, crown ethers, benzo-crowns, dibenzo-crowns, dicyclohexano-crowns, and derivatives and modified variants thereof. These cyclic molecules e.g. cyclodextrins can be used alone or in combination of two or more thereof. Among others, α-cyclodextrin, β-cyclodextrin and γ-cyclodextrin are preferred. Particularly preferred is α-cyclodextrin in terms of ease of inclusion.

The linear molecule 3 has a linear or substantially linear structure. The linear molecule 3 may have a branched chain or chains as long as the linear molecule 3 is included in the cyclic molecule 2 in such a manner that the cyclic molecule 2 functions as a rotator to make a rotational movement for the pulley effect. Although the length of the linear molecule 3 depends on the size of the cyclic molecule 2, there is no particular restriction on the length of the linear molecule 3 as long as the cyclic molecule 2 contributes to the pulley effect.

Preferably, the linear molecule 3 has reactive groups at the opposite ends thereof for ease of bonding with the blocking groups 4. These reactive groups are selected appropriately depending on the kind of the blocking groups 4 etc. Specific examples of the reactive groups are a hydroxyl group, amino groups, carboxyl groups and thiol groups.

Specific examples of the linear molecule 3 include, but not limited to, polyalkylenes, polyesters such as polycaprolactone, polyethers such as polyethylene glycol, polyamides, polyacryls and linear compounds containing benzene ring structures. Among others, polyethylene glycol and polycaprolactone are preferred. Particularly preferred is polyethylene glycol in terms of solubility in water or aqueous solvent.

The molecular weight of the linear molecule 3 is preferably 1000 to 50000, more preferably 10000 to 40000, still more preferably 20000 to 35000. If the molecular weight of the linear molecule 3 is less than 1000, the coating film decreases in elongation to cause abrasion and chipping resistance deterioration due to insufficient pulley effect of the cyclic molecule 2. If the molecular weight of the linear molecule 3 exceeds 50000, the polyrotaxane decreases in solubility. In addition, the surface coating film deteriorates in overcoat appearance e.g. smoothness and luster.

The blocking groups 4 can be of any kind as long as the blocking groups 4 are bonded to the opposite ends of the linear molecule 3 to keep the cyclic molecule 2 skewered with the linear molecule 3. As the blocking groups 4, there can be used bulky and ionic groups. Herein, the "groups" refers to various groups such as molecular groups and polymer groups.

Specific examples of the bulk groups are those in spherical form or lateral-wall form. Specific examples of the ionic groups are those capable of interacting with (e.g. repeling) the ionicity of the cyclic molecule 2 to keep the cyclic molecule 2 skewered with the linear molecule 3.

Specific examples of the blocking groups 4 are dinitrophenyls such as 2,4-dinitrophenyl and 3,5-dinitrophenyl, cyclodextrins, adamantanes, trityls, fluoresceins, pyrenes, and derivatives and modified variants thereof.

The hydrophilic polyrotaxane 1 can be produced by e.g. (1) mixing the cyclic molecule 2 and the linear molecule 3 to pass the linear molecule 3 through the opening of the cyclic molecule 2 in a skewered manner, (2) blocking the opposite ends of the resulting pseudo-polyrotaxane (i.e. the opposite ends of the linear molecule 3) with the blocking groups 4 to prevent elimination of the cyclic molecule 2 from the linear molecule 3, and then, (3) modifying the hydroxyl group or groups of the cyclic molecule 2 of the polyrotaxane 1 with the hydrophilic modifying group 2a.

In the above step (1), the cyclic molecule 2 may be those of which the hydroxyl group or groups have already been modified with the hydrophilic modifying group 2a. The above step (3) could be omitted in this case.

By the above production process, the curable hydrophilic polyrotaxane 1 can be produced with excellent solubility in water or aqueous solvent and suitably used as the curable aqueous overcoating material.

The hydrophilic polyrotaxane 1 may be crosslinked with the other polymer having a relatively low molecular weight, typically of the order of a few thousands, to form a hydrophilic crosslinked polyrotaxane 6 as long as the polyrotaxane shows solubility in water or aqueous solvent. This crosslinked polyrotaxane 6 can be used in the curable aqueous overcoating composition in place of or in combination with the non-crosslinked polyrotaxane 1.

Alternatively, the hydrophilic polyrotaxane 1 may be bonded with the other coating film forming material e.g. the polymer to form a hydrophilic crosslinked polyrotaxane 6 during the formation of the coating film. The hydrophilic polyrotaxane 1 acts as the precursor of the crosslinked polyrotaxane 6 and has improved solubility in water or aqueous solvent as mentioned above, so that the crosslinked polyrotaxane 6 can be easily formed by crosslinking between the hydrophilic polyrotaxane 1 and the aqueous coating film forming component in the presence of water or aqueous solvent.

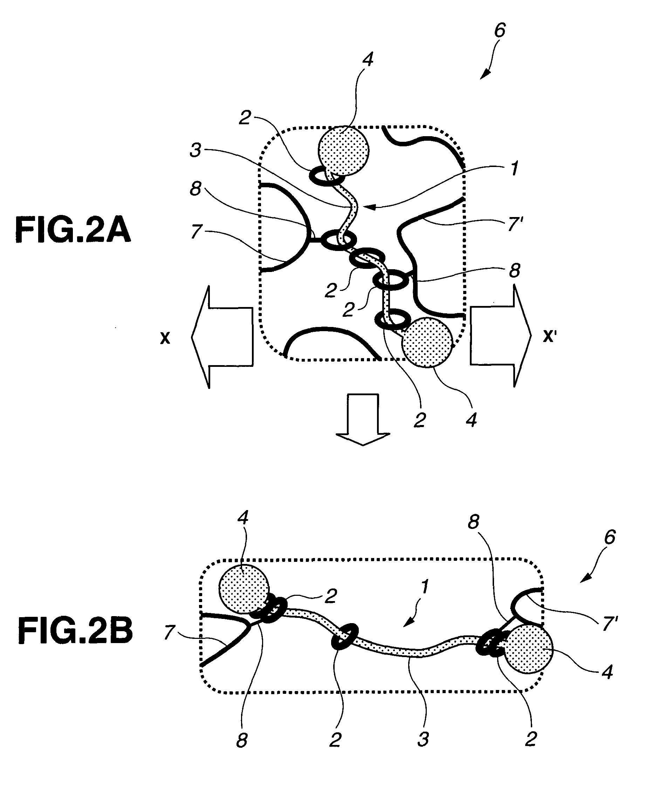

FIGS. 2A and 2B are schematic views of the crosslinked polyrotaxane 6. The crosslinked polyrotaxane 6 is obtained when the hydrophilic polyrotaxane 1 forms cross-links 8 with the polymer 7, 7' via the hydrophilic modifying group 2a of the cyclic molecule 2 and the other functional group. (It should be noted that the hydrophilic modifying group 2a of the cyclic molecule 2 is omitted from FIGS. 2A and 2B.) When deformation stress is applied to the crosslinked polyrotaxane 6 in the direction of an arrow X-X' in FIG. 2A, the crosslinked polyrotaxane 6 can be readily deformed for internal stress absorption under the pulley effect by moving the cyclic molecule 2 along the linear molecule 3 as shown in FIG. 2B and thus show high elasticity, viscoelasticity and mechanical strength as compared to conventional gel materials.

The coating film of such a crosslinked polyrotaxane 6 combines both of the properties of the polyrotaxane and the properties of the coating film forming component crosslinked therewith, without a loss of the properties of the coating film forming component, and shows a desired level of mechanical strength upon selection of the polymer component etc. so as to attain high resistance to abrasion, chipping, cracking, weather and stain as well as good coating adhesion. Accordingly, the curable aqueous overcoating material of the present invention can be applied to aqueous polymer coatings, notably automotive and home electrical appliance coatings (coating films) that require resistance to washing, abrasion, chipping, impact and weather.

For the formation of the crosslinked polyrotaxane 6, it is preferable that all or part of the hydrophilic modifying group 2a of the hydrophilic polyrotaxane 1 has a functional moiety in order to improve the reactivity of the polyrotaxane to the other polymer. The functional moiety is preferably imparted to the outer side of the cyclic molecule 2 e.g. cyclodextrin in terms of three-dimensional molecular structure. The hydrophilic polyrotaxane 1 can be easily bonded or crosslinked with the polymer via the functional moiety. The functional moiety is selected appropriately depending on e.g. the kind of the solvent without the use of a crosslinking agent. With the use of a crosslinking agent, the functional moiety is selected appropriately depending on the kind of the crosslinking agent.

Specific examples of the functional moiety include, but not limited to, a hydroxyl, carboxyl, amino, epoxy, isocyanate, thiol and aldehyde moieties. These functional moieties can be used alone or in combination of two or more thereof. Preferred are those remaining in the compounds bonded to e.g. the cyclodextrin hydroxyl groups and containing any of hydroxyl, carboxyl, amino, epoxy and isocyanate moieties. Particularly preferred is hydroxyl in terms of reaction diversity. As the compound capable of forming such functional moiety, there can be used, but not limited to, propylene oxide. For example, the functional moiety can be formed from a polymeric compound as long as the improved solubility of the hydrophilic modified polyrotaxane 1 in water or aqueous solvent does not become so lowered. In this case, the polymeric compound preferably has a molecular weight of the order of a few thousands in terms of solubility. It is further preferable that the functional moiety exhibits reactivity under such a condition that does not cause elimination of the blocking groups 4.

The crosslinked polyrotaxane 6 can be produced typically by (a) mixing the hydrophilic polyrotaxane 1 as the curable aqueous clear coating material with the other coating film forming material, (b) physically or chemically crosslinking at least part of the coating film forming material, and then, (c) bonding (curing) the hydrophilic polyrotaxane 1 with at least part of the other coating film forming material via the cyclic molecule 2.

The above steps (a) to (c) can be carried out smoothly in either water or aqueous solvent, or mixed solvent thereof. Further, these steps can be carried out more smoothly with the use of a curing agent.

The mixing step (a) can be done with or without the use of a solvent such as water or aqueous solvent etc. although it depends on the kind of the coating film forming component. The solvent can be removed by heating during the coating film formation.

It is desirable in the crosslinking and bonding steps (b) and (c) to repeatedly form chemical cross-links such as urethane bonds between the hydroxyl group of the cyclic molecule 2 of the polyrotaxane land the other coating material e.g. polyisocyanate for production of the crosslinked polyrotaxane 6. These steps (b) and (c) can be done substantially concurrently with each other.

In the present invention, the content of the hydrophilic polyrotaxane 1 in the curable aqueous overcoating composition is generally 1 to 90%, preferably 30 to 90%, more preferably 60 to 90%, in units of mass ratio with respect to the coating film forming component (solid content). If the content percentage of the hydrophilic polyrotaxane 1 with respect to the coating film forming component is less than 1%, the coating film may decrease in elongation due to insufficient pulley effect of the polyrotaxane 1 and thus fail to achieve the required level of abrasion and chipping resistance. If the content percentage of the hydrophilic polyrotaxane 1 with respect to the coating film forming component exceeds 90%, the coating film may decreases in surface smoothness to cause coating appearance deterioration.

There is no particular restriction on the resin material. It is preferable that the resin material has its main or side chain with either a hydroxyl group, an amino group, a carboxyl group, an epoxy group, a vinyl group, a thiol toup or a photo-crosslinking group, or any combination thereof. As the photo-crosslinking group, there can be used cinnamicacid, coumarin, chalcone, anthracene, styryl pyridine, styryl pyridinium salt and styryl quinoline salt. Two or more kinds of resins can be used in combination. In this case, it is preferable that at least one of the resins is capable of being bonded to the polyrotaxane 1 via the cyclic molecule 2. The resin material can be either of homopolymer or copolymer. The copolymer can be formed of two or more kinds of monomers. Further, the copolymer can be either a block copolymer, alternating copolymer, random copolymer or graft copolymer.

Specific examples of the resin material include polyvinyl alcohols, polyvinyl pyrrolidones, poly(meth)acrylic acids, cellulosic resins such as carboxymethyl celluloses, hydroxyethyl celluloses and hydroxypropyl celluloses, polyacrylamides, polyethylene oxides, polyethylene glycols, polypropylene glycols, polyvinyl acetals, polyvinyl methyl ethers, polyamines, polyethylene imines, caseins, gelatins, starchs, copolymers thereof, polyolefins such as polyethylenes, polypropylenes, and copolymers thereof with the other olefin copolymers, polyesters, polyvinyl chlorides, polystyrenes such as styrene polymer and acrylonitrile-styrene copolymers, polyacrylates such as polymethyl methacrylates, (meth)acrylate copolymers and acrylonitrile-methylacrylate copolymers, polycarbonates, polyurethanes, polyvinyl chloride acetate copolymers, polyvinyl butyrals, and derivatives or modified variants thereof, polyisobutylene, polytetrahydrofurans, polyanilines, acrylonitrile-butadiene-styrene compolymers (ABS resins), polyamides such as nylon (registered tradename), polyimides, polydienes such as polyisoprene and polybutadiene, polysiloxane such as polydimethyl siloxane, polysulfones, polyimines, acetic polyanhydrides, polyureas, polysulfides, polyphosphazenes, polyketones, polyphenylenes, polyhaloolefins and derivatives thereof. As the resin derivatives, preferred are those having hydroxyl, amino, carboxyl, epoxy, vinyl, thiol or photo-crosslinking group, or any combination thereof, as mentioned above.

Specific examples of the curing agent include melamine resin, polyisocyanate compound, block isocyanate compound, cyanuric chloride, trimesoyl chloride, terephthaloyl chloride, epichlorohydrin, dibromobenzene, glutaric aldehyde, phenylene diisocyanate, trilene diisocyanate, divinyl sulfone, 1,1'-carbonyldiimidazole and alkoxysilane. These curing agents can be used alone or in combination of two or more thereof. The molecular weight of the curing agent is generally less than 2000, preferably less than 1000, more preferably less than 600, still more preferably less than 400.

Specific examples of the addition agent include ultraviolet absorber, light stabilizer, a surface conditioner and a boiling inhibitor. Specific examples of the pigment include organic coloring pigments such as azo pigments, phthalocyane pigments, perilene pigments and inorganic coloring pigments such as carbon black, titanium dioxide and iron red. Specific examples of the brightening agent include aluminum pigments and mica pigments.

The solvent can be either water or aqueous solvent. Herein, the aqueous solvent refers to a solvent capable of interacting with water and thus having an affinity for water. Specific examples of the aqueous solvent include alcohols such as isopropyl alcohol, butyl alcohol and ethylene glycol, ether esters such as cellosolve acetate, butylcellosolve acetate and diethylene glycol monoethyl ether and glycol ethers such as ethylene glycol monoethyl ether, ethylene glycol monobutyl ether and propylene glycol monomethyl ether. The hydrophilic polyrotaxane 1 generally shows good solubility in a mixed solvent of two or more of these solvents. Among others, alcohols are preferred. Especially preferred is glycol ether. The solvent may be prepared by adding a slight amount of organic solvent such as toluene into the aqueous solvent as long as the solvent maintains a strong water affinity in its entirety.

It is desirable in the present invention to blend a diluted solution of the hydrophilic polyrotaxane 1 in water or aqueous solvent with various coating medium materials although the hydrophilic polyrotaxane 1 can be blended directly with the various coating medium materials. The polyrotaxane solution may be prepared at the time of or prior to production of the coating composition. For example, the curable aqueous overcoating composition can be produced by blending the hydrophilic polyrotaxane 1 with any existing curable aqueous coating such as acrylic melamine coating or two-liquid urethane coating.

The curable aqueous overcoating comosition can be either a luster coating or a lusterless coating in the present invention. In this case, a matte component such as resin beads can be added along with the above coating components.

Further, the curable aqueous overcoating comosition can be either a clear coating, a base coating or an enamel coating in the present invention. Namely, the coating composition can attain base coating or enamel coating characteristics by the addition of an organic or inorganic pigment. The coating composition can attain color-clear coating characteristics by the addition of a pigment or dye to such an extent as not to cause a loss of transparency.

In the present invention, the curable aqueous overcoating composition can be applied to various substrate materials such as metal materials e.g. iron, steel and aluminum, resin materials, wooden materials, lithic materials such as stones, bricks and blocks and leather materials by means of various coating machines such as spray gun under the same workability as to conventional coatings and dried and cured to the coating film (clear coating film, base coating film, enamel coating film etc.) at room temperature. There is no particular restriction on the thickness of the coating film. Preferably, the coating film thickness is of the order of 20 to 40 µm in the case of the clear coating film, 10 to 15 µm in the case of the base coating film and 20 to 40 µm in the case of the enamel coating film.

For examples, it is feasible to apply a base coating to a substrate, apply the curable aqueous overcoating composition as a clear coating onto the base coating, and then, bake these coatings, thereby providing a two-layer laminated coating film structure of base and clear coating layers.

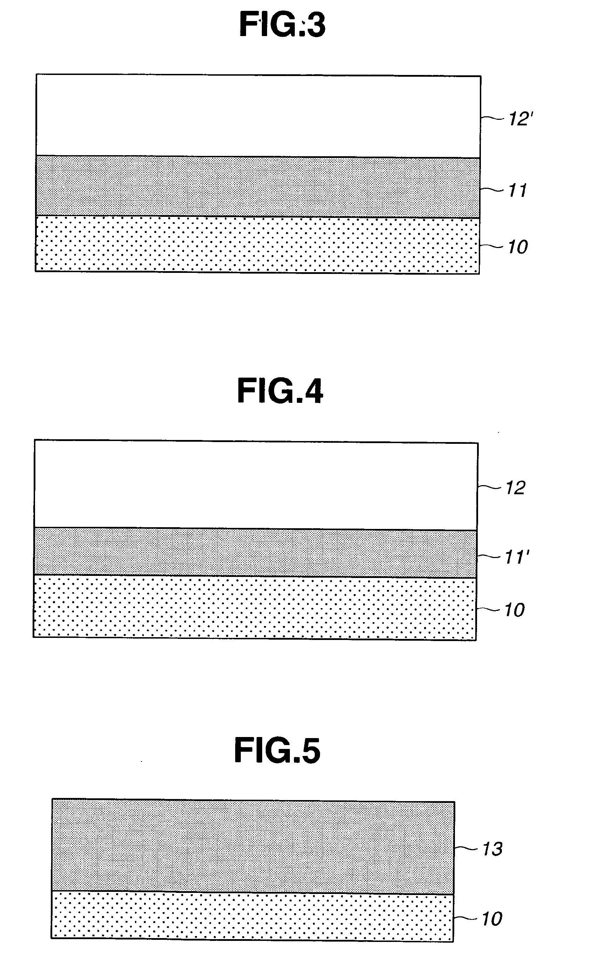

The base coating and the clear coating can be applied and baked in the same way as above, after applying an undercoating to the substrate and subjecting the undercoating to baking or room-temperature drying, so as to provide a three-layer laminated coating film structure consisting of an undercoating layer 10, a base coating layer 11 and a clear coating layer 12' of the curable aqueous overcoating composition formed sequentially on the substrate surface as shown in FIG. 3.

It is also feasible to apply the curable aqueous overcoating composition as a base coating to a substrate, apply a clear coating onto the base coating, and then, subject these coatings to baking or room-temperature drying.

The base coating and the clear coating can be applied and dried in the same way as above, after applying an undercoating to the substrate and subjecting the undercoating to baking or room-temperature drying, so as to provide a three-layer laminated coating film structure consisting of an undercoating layer 10, a base coating layer 11' of the curable aqueous overcoating composition and a clear coating layer 12 as shown in FIG. 4.

It is further feasible to apply and bake the curable aqueous overcoating composition as an enamel coating after applying an undercoating to a substrate and subjecting the undercoating to baking or room-temperature drying, so as to provide a two-layer laminated coating film structure consisting of an undercoating layer 10 and an enamel coating layer 13 of the curable aqueous overcoating composition as shown in FIG. 5. Depending on the kind of the substrate, the undercoating may be omitted.

For convenience in explanation, the laminated coating film can imply those formed by applying only the aqueous overcoating composition to the substrate. The coating film is not however limited to be of single-layer structure but may be of multilayer structure.

### Examples

The present invention will be described in more detail by reference to the following examples. It should be however noted that the following examples are only illustrative and not intended to limit the invention thereto.

### Example 1

### (1) Preparation of PEG-carboxylic acid by TEMPO oxidation of PEG

First, 10 g of polyethylene glycol (PEG) (molecular weight: 1000), 100 mg of TEMPO (2,2,6,6-tetramethyl-1-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A dispersion liquid was prepared by dispersing 14 g of the above-prepared inclusion complex in 20 ml of mixed solvent of dimethylformamide/dimethyl sulfoxide (DMF/DMSO) (volume ratio: 75/25). On the other hand, 3 g of benzotriazole-1-yl-oxy-tris(dimethylamino) phosphonium hexafluorophosphate (BOP reagent), 1 g of 1-hydroxybenzotriazole (HOBt), 1.4 g of adamantine amine and 1.25 ml of diisopropylethyl amine were dissolved in this order into 10 ml of DMF at room temperature. This solution was added to the dispersion liquid and quickly mixed well together by shaking. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCl aqueous solution, dialyzed by a dialyzing tube and freeze-dried to recover a hydrophilic modified polyrotaxane. The thus-obtained hydrophilic modified polyrotaxane was identified by ¹H-NMR and GPC to be of the desired polyrotaxane form in which the α-CD inclusion amount was 0.06 and the hydrophilic modification degree was 0.1.

### (5) Preparation of coating composition

The above hydrophilic polyrotaxane was dissolved to a concentration of 10% in distilled water. The resulting hydrophilic polyrotaxane aqueous solution was added, with stirring, to a water-soluble alkyd resin (nonvolatile content: 42%, hydroxyl number: 100 mgKOH/g, acid number: 14 mgKOH/g) and blended with HDI isocyanate (NCO: 8.2%) in such a manner that the ratio between the water-soluble alkyd resin and the isocyanate was 2.6/1.0. With this, a curable aqueous clear coating composition was completed such that the content of the hydrophilic polyrotaxane was 50% with respect to the coating film forming component; the molecular weight of the linear molecule (PEG) was 1000; the inclusion amount of the cyclic molecule (α-CD) was 0.06; and the hydrophilic modification degree was 0.1.

### (6) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. A metallic coating (available under the trade name of "Aqua BC-3(3)" from Nippon Yushi Co.) was further applied with a thickness of 15 µm. The curable aqueous clear coating composition was then applied by wet on wet with a dry thickness of 30 µm and baked for 30 minutes at 140°C to form a clear·coating film.

### Examples 2-8

Curable aqueous clear coating compositions were prepared in the same way as in Example 1, except for the compositional specifications as indicated in TABLE 1. Further, laminated coating films were formed using the prepared clear coating compositions.

### Example 9

### (1) Preparation of PEG-carboxylic acid by TEMPO oxidation of PEG

First, 10 g of polyethylene glycol (PEG) (molecular weight: 35000), 100 mg of TEMPO (2,2,6,6-tetramethyl-1-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A solution was prepared by dissolving 3 g of BOP reagent, 1 g of HOBt, 1.4 g of adamantine amine and 1.25 ml of diisopropylethyl amine in this order into 10 ml of DMF at room temperature. To this solution added was 14 g of the above-prepared inclusion complex, followed by stirring·quickly. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCl aqueous solution, dialyzed by a dialyzing tube and freeze-dried to recover a hydrophilic modified polyrotaxane. The thus-obtained hydrophilic modified polyrotaxane was identified by ¹H-NMR and GPC to be of the desired polyrotaxane form in which the α-CD inclusion amount was 0.61 and the hydrophilic modification degree was 0.1.

### (5) Preparation of coating composition

The above hydrophilic polyrotaxane was dissolved to a concentration of 10% in distilled water. The resulting hydrophilic polyrotaxane aqueous solution was added, with stirring, to an acrylic-melamine curable enamel coating (white coating) available under the trade name of "Aqua BC-3(3)" from Nippon Yushi Co., thereby completing a curable aqueous enamel coating composition such that the content of the hydrophilic polyrotaxane was 1% with respect to the coating film forming component; the molecular weight of the linear molecule (PEG) was 35000; the inclusion amount of the cyclic molecule (α-CD) was 0.61; and the hydrophilic modification degree was 0.1.

### (6) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. The curable aqueous enamel coating was then applied with a dry thickness of 30 µm and baked for 30 minutes at 140°C to form an enamel coating film.

### Examples 10-12

Curable aqueous enamel coating compositions were prepared in the same way as in Example 9, except for the compositional specifications as indicated in TABLE 1. Further, laminated coating films were formed using the prepared enamel coating compositions.

### Examples 13-14

Curable aqueous clear coating compositions were prepared in the same way as in Examples 1-8, except for the compositional specifications as indicated in TABLE 1. Further, laminated coating films were formed using the prepared clear coating compositions.

### Comparative Examples 1-5

Curable aqueous clear coating compositions were prepared in the same way as in Examples 1-8, except for the compositional specifications as indicated in TABLE 1. Further, laminated coating films were formed using the prepared clear coating compositions.

### Comparative Examples 6

### (1) Preparation of PEG-carboxylic acid by TEMPO oxidation of PEG

First, 10 g of polyethylene glycol (PEG) (molecular weight: 100000), 100 mg of TEMPO (2,2,6,6-tetramethyl-1-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A solution was prepared by dissolving 3 g of BOP reagent, 1 g of HOBt, 1.4 g of adamantine amine and 1.25 ml of diisopropylethyl amine in this order into 10 ml of DMF at room temperature. To this solution added was 14 g of the above-prepared inclusion complex, followed by stirring quickly. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCl aqueous solution, dialyzed by a dialyzing tube and freeze-dried to recover a hydroxy-propylated polyrotaxane.

### (5) Hydrophobic modification of polyrotaxane

Then, 10 ml of ε-caprolactone was dried with a molecular sieve and added to 500 mg of the above hydroxy-propylated polyrotaxane. The resulting sample was stirred for 30 minutes at room temperature, subjected to permeation and then reacted with 0.2 ml of tin 2-ethylhexanoate for 1 hour at 100°C. After the completion of the reaction, the sample was dissolved in 50 ml of toluene. The sample solution was added to 450 ml of hexane to precipitate a hydrophobic polyrotaxane out of the solution. The precipitated hydrophobic polyrotaxane was recovered and dried. The thus-obtained hydrophobic modified polyrotaxane was identified by ¹H-NMR and GPC to be of the desired polyrotaxane form in which the α-CD inclusion amount was 0.61 and the hydrophobic modification degree was 0.02.

### (6) Preparation of coating composition

The above hydrophobic polyrotaxane was dissolved to a concentration of 10% in distilled water. The resulting hydrophobic polyrotaxane aqueous solution was added, with stirring, to a water-soluble alkyd resin (nonvolatile content: 42%, hydroxyl number: 100 mgKOH/g, acid number: 14 mgKOH/g) and blended with HDI isocyanate (NCO: 8.2%) in such a manner that the ratio between the water-soluble alkyd resin and the isocyanate was 2.6/1.0. With this, a curable aqueous clear coating composition was completed such that the content of the hydrophobic polyrotaxane was 50% with respect to the coating film forming component; the molecular weight of the linear molecule (PEG) was 100000; the inclusion amount of the cyclic molecule (α-CD) was 0.61; and the hydrophobic modification degree was 0.02.

### (7) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. A metallic coating (available under the trade name of "Aqua BC-3(3)" from Nippon Yushi Co.) was further applied with a thickness of 15 µm. The curable aqueous clear coating composition was then applied by wet on wet with a dry thickness of 30 µm and baked for 30 minutes at 140°C to form a clear coating film.

### Property Evaluations

Evaluation tests were conducted on the solubility and pigment sedimentation degree of the coating compositions of Examples 1-14 and Comparative Examples 1-6 and the smoothness, chipping resistance, adhesion and reactivity of the coating films of these coating compositions based on the following criteria. The evaluation results are indicated in TABLE 1 along with the coating composition specifications.

### (1) Solubility

The solubility was evaluated visually checking the white turbidity of the coating applied to the glass plate.
O: no change
Δ: slightly white turbid
×: white turbid

### (2) Pigment sedimentation degree

The pigment sedimentation degree was evaluated by leaving the coating composition in a constant temperature bath of 40°C and checking whether or not the coating composition was in hard cake form (where the coating composition was solidified and could not be recovered by stirring) due to pigment sedimentation.
O: recoverable
Δ: recoverable but time-consuming
×: unrecoverable

### (3) Reactivity

The reactivity was evaluated by mixing hexamethylenediisocyanate with the hydrophilic polyrotaxane in each example or comparative example (the hydrophobic polyrotaxane in Comparative Example 6) at an equivalent weight ratio, baking and drying the coating for 30 minutes at 140°C, and then, checking the presence or absence of urethane bonds in the coating by infrared absorption spectrum measurement.
○: urethane bonds
×: no urethane bonds

### (4) Smoothness

The smoothness was evaluated by visually checking the evenness of the coating applied.
○: considerably smooth
Δ: slightly uneven
×: uneven

### (5) Abrasion resistance

The abrasion resistance was evaluated by placing the coating in an abrasion tester with a dust flannel (friction cloth) adhered to a sliding unit of the abrasion tester by a double-faced tape, causing 50 reciprocating movements of the coating relative to the friction cloth under a load of 0.22 g/cm², and then, checking the occurrence or non-occurrence of abrasive damage to the coating.
○: almost no damage
Δ: little damage
×: hard, remarkable damage

### (6) Weather resistance

The weather resistance was evaluated by testing the coating with a xenon weather meter (XWON) for 1440 hours and measuring the chromaticity difference (ΔE) of the coating.
○: ΔE 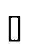 3
Δ: 3 < ΔE 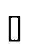 5
×: ΔE > 5

**TABLE 1**

| Section | Polyrotaxane | | | | Coating composition | | | Coating film properties | | | |
|---|---|---|---|---|---|---|---|---|---|---|---|
| | PEG molecular weight | α-CD inclusion amount | Hydrophilic modification degree | Content in coating composition | Type | Solubility | Pigment sedimentation degree | Reactivity | Abrasion Smoothness resistance | | Weather resistance |
| Example 1 | 1000 | 0.06 | 0.1 | 50 | clear | ○ | - | ○ | ○ | Δ | ○ |
| Example 2 | 1000 | 0.61 | 0.1 | 50 | clear | ○ | - | ○ | ○ | Δ | ○ |
| Example 3 | 50000 | 0.06 | 0.1 | 50 | clear | ○ | - | ○ | ○ | ○ | ○ |
| Example 4 | 50000 | 0.61 | 0.1 | 50 | clear | ○ | - | ○ | ○ | ○ | v |
| Example 5 | 35000 | 0.61 | 0.1 | 1 | clear | ○ | - | ○ | ○ | Δ | ○ |
| Example 6 | 35000 | 0.61 | 0.1 | 50 | clear | ○ | - | ○ | ○ | ○ | ○ |
| Example 7 | 35000 | 0.61 | 0.5 | 50 | clear | ○ | - | ○ | ○ | ○ | ○ |
| Example 8 | 35000 | 0.61 | 0.1 | 90 | clear | ○ | - | ○ | ○ | ○ | ○ |
| Example 9 | 35000 | 0.61 | 0.1 | | enamel | ○ | ○ | ○ | ○ | Δ | ○ |
| Example 10 | 35000 | 0.61 | 0.1 | 50 | enamel | ○ | ○ | ○ | ○ | ○ | ○ |
| Example 11 | 35000 | 0.61 | 0.5 | 50 | enamel | ○ | ○ | ○ | ○ | ○ | ○ |
| Example 12 | 35000 | 0.61 | 0.1 | 90 | enamel | ○ | ○ | ○ | ○ | ○ | ○ |
| Example 13 | 500 | 0.61 | 0.5 | 50 | clear | Δ | - | ○ | ○ | Δ | ○ |
| Example 14 | 100000 | 0.61 | 0.5 | 50 | clear | Δ | - | ○ | Δ | Δ | Δ |
| Comparative Example 1 | 35000 | 0.61 | 0.1 | 0 | clear | - | - | - | ○ | × | ○ |
| Comparative Example 2 | 500 | 0.06 | 0 | 50 | clear | × | - | × | × | × | ○ |
| Comparative Example 3 | 500 | 0.61 | 0 | 50 | clear | × | - | × | × | × | ○ |
| Comparative Example 4 | 100000 | 0.06 | 0 | 50 | clear | × | - | × | × | × | Δ |
| Comparative Example 5 | 100000 | 0.61 | 0 | 50 | clear | × | - | × | × | × | Δ |
| Comparative Example 6 | 100000 | 0.61 | 0.02 (PCL) | 50 | clear | × | - | ○ | × | × | Δ |

It has been clearly shown in TABLE 1 that the curable aqueous overcoating compositions of Examples 1-14 had good solubility and high pigment sedimentation resistance because of polyrotaxane hydrophilicity and that the films of these overcoating compositions had improved abrasion resistance as well as good appearance and weather resistance under the polyrotaxane pulley effect. The overcoating compositions and the coating films of Examples 13-14 had a tendency to show some property deteriorations because of the molecular weight of the linear molecule falling outside the preferable range, but were considered usable on the whole.

It has been shown that, by contrast, the overcoating composition of Comparative Example 1 where no polyrotaxane was added, the overcoating compositions of Comparative Examples 2-5 where α-CD of the polyrotaxane was unmodified and the overcoating composition of Comparative Example 6 where α-CD of the polyrotaxane was hydrophobically modified had poor abrasion resistance, solubility and coating smoothness.

Although the present invention has been described with reference to the above-specific embodiments of the invention, the invention is not limited to these exemplary embodiments. Various modification and variation of the embodiments described above will occur to those skilled in the art in light of the above teachings.

## Claims

1. A curable aqueous overcoating material formed of a hydrophilic polyrotaxane alone or in combination with an additional resin, the hydrophilic polyrotaxane having a cyclic molecule, a linear molecule included in the cyclic molecule in a skewered manner and blocking groups arranged on opposite ends of the linear molecule to prevent elimination of the cyclic molecule, at least one of the linear molecule and the cyclic molecule having a hydrophilic modifying group.

2. The curable aqueous overcoating material according to claim 1, wherein the hydrophilic modifying group includes hydrophilic group, or hydrophilic and hydrophobic groups, so as to show hydrophilicity in the entirety.

3. The curable aqueous overcoating material according to claim 1, wherein the hydrophilic modifying group have functionality in whole or in part.

4. The curable aqueous overcoating material according to claim 2, wherein the cyclic molecule has hydroxyl groups and all or part of the hydroxyl groups are modified with the hydrophilic group.

5. The curable aqueous overcoating material according to claim 4, wherein the degree of modification of the cyclic molecule with the hydrophilic modifying group is 0.1 or greater, with the proviso that the maximum possible degree of modification of the hydroxyl groups of the cyclic molecule is 1.

6. The curable aqueous overcoating material according to any one of claims 1 to 5, wherein the hydrophilic polyrotaxane has a solubility parameter of 8.5 to 23.4 and is capable of being dissolved or dispersed uniformly in water or aqueous solvent.

7. The curable aqueous overcoating material according to any one of claims 1 to 6, wherein the inclusion amount of the cyclic molecule is 0.06 to 0.61, with the proviso that the maximum possible inclusion amount of the cyclic molecule to include therein the linear molecule is 1.

8. The curable aqueous overcoating material according to any one of claims 1 to 7, wherein the linear molecule has a molecular weight of 1000 to 50000.

9. The curable aqueous overcoating material according to any one of claims 1 to 8, wherein the cyclic molecule is at least one cyclodextrin selected from the group consisting of α-cyclodextrin, β-cyclodextrin and γ-cyclodextrin.

10. A curable aqueous overcoating composition comprising the curable aqueous overcoating material according to any one of claims 1 to 8.

11. The curable aqueous overcoating composition according to claim 10, wherein the overcoating composition is capable of forming a coating film by crosslinking of the hydrophilic polyrotaxane.

12. The curable aqueous overcoating composition according to claim 10 or 11, wherein the content of the hydrophilic polyrotaxane is 1 to 90% in units of mass ratio with respect to coating film forming component.

13. The curable aqueous overcoating composition according to any one of claims 9 to 12, wherein the composition is prepared by blending at least one selected from the group consisting of a curing agent, an addition agent, a pigment, a brightening agent and a solvent with the curable aqueous overcoating material.

14. The curable aqueous overcoating composition according to any one of claims 9 to 13, wherein the overcoating composition is either a luster coating or a lusterless coating composition.

15. The curable aqueous overcoating composition according to any one of claims 9 to 14, wherein the composition is a clear coating composition.

16. The curable aqueous overcoating composition according to any one of claims 9 to 14, wherein the composition is a base coating composition.

17. The curable aqueous overcoating composition according to any one of claims 9 to 14, wherein the composition is an enamel coating composition.

18. A coating film formed by curing the curable aqueous overcoating composition according to any one of claims 9 to 17.

19. A coating film having a layer of a base coating and a layer of the clear coating composition according to claim 15 formed sequentially on a substrate.

20. The coating film according to claim 19, having an undercoating layer beneath the layer of the base coating.

21. A coating film having a layer of the base coating composition according to claim 16 and a layer of a clear coating formed sequentially on a substrate.

22. The coating film according to claim 21, having an undercoating layer beneath the layer of the base coating composition.

23. A coating film having a layer of the enamel coating composition according to claim 17 formed on a substrate.

24. The coating film according to claim 23, having an undercoating layer beneath the layer of the enamel coating composition.

25. A coating film having a layer of the base coating composition according to claim 16 and a layer of the clear coating composition according to claim 15 formed sequentially on a substrate.

26. The coating film according to claim 25, having an undercoating layer beneath the layer of the base coating composition.
